Europäisches Patentamt

European Patent Office

Office européen des brevets

(19)

(11) Veröffentlichungsnummer : **0 117 394**
**B1**

(12) **EUROPÄISCHE PATENTSCHRIFT**

(45) Veröffentlichungstag der Patentschrift :
15.04.87

(51) Int. Cl.⁴ : **B 65 G 69/28**

(21) Anmeldenummer : **84100206.6**

(22) Anmeldetag : **11.01.84**

(54) Überfahrbrücke für Rampen.

(30) Priorität : 01.02.83 DE 3303207

(43) Veröffentlichungstag der Anmeldung :
05.09.84 Patentblatt 84/36

(45) Bekanntmachung des Hinweises auf die Patenterteilung : 15.04.87 Patentblatt 87/16

(84) Benannte Vertragsstaaten :
AT BE CH DE FR GB IT LI LU NL SE

(56) Entgegenhaltungen :
EP-A- 0 045 581
DE-A- 2 815 535
DE-A- 2 926 057

(73) Patentinhaber : Alten, Kurt
Ringstrasse 14
D-3015 Wennigsen (DE)

(72) Erfinder : Alten, Kurt
Ringstrasse 14
D-3015 Wennigsen (DE)

(74) Vertreter : Depmeyer, Lothar
Auf der Höchte 30
D-3008 Garbsen 1 (DE)

EP 0 117 394 B1

## Beschreibung

Die Erfindung betrifft eine Überfahrbrücke für Rampen mit einer an ihrem hinteren Ende um eine waagerechte Achse an der Rampe schwenkbar gelagerten, durch einen Hubzylinder nach oben bewegbaren Brückenplatte und einer am freien Ende der Brückenplatte angelenkten, durch einen Schwenkzylinder in ihre Wirklage bewegbaren Verlängerung, die sich in ihrer Wirklage auf einer zu be- bzw. entladenden Plattform abstützt und zur Einnahme ihrer Ruhelage in eine etwa senkrechte Stellung schwenkbar ist, wobei die Druckleitung des Schwenkzylinders über ein Druckbegrenzungsventil an die Druckleitung des Hubzylinders angeschlossen ist in der Weise, dass die Verlängerung erst in die Wirklage ausklappt, wenn die Brückenplatte ihre obere Endstellung einnimmt, und bei abgeschaltetem Druckerzeuger sich die Brückenplatte bei in Wirklage befindlicher Verlängerung aufgrund ihres Eigengewichts absenkt.

Bei bekannten Überfahrbrücken dieser Ausbildung (DE-A-2 926 057) sind der Schwenkzylinder und der Hubzylinder doppeltwirkend ausgeführt. Zudem befindet sich in der Zuleitung zum Schwenkzylinder ein Druckumschaltventil. Der Steuerdruck dieses Ventils ist so eingestellt, dass er oberhalb des Druckes liegt, der durch das Eigengewicht der absinkenden Brückenplatte in der Pumpendruckleitung erzeugt wird. Damit schaltet das Druckumschaltventil in seine Ruhestellung um, wodurch ein Überströmen der hydraulischen Flüssigkeit von dem hinter dem Kolben des Schwenkzylinders befindlichen Raum in den davor befindlichen Zylinderraum verhindert und damit die Verlängerung beim Absenken der Brückenplatte im ausgeschwenkten Zustand gehalten wird. Demgemäss wird die Verlängerung durch eine Sperrwirkung des Druckumschaltventils und nicht durch einen sich aufgrund der Senkbewegung der Brückenplatte aufbauenden Druck in der Wirkstellung gehalten.

Aus der EP-A 0 045 581 ist weiterhin eine hydraulische Steuerung für eine Überfahrbrücke bekannt, bei der der im Hubzylinder durch das Eigengewicht der Brückenplatte entstehende Druck zum Halten der Verlängerung in ihrer Wirklage dient, wenn die Brückenplatte abgesenkt wird. Dies wird dadurch erzielt, dass mit dem Erreichen der Endstellung des Kolbens des Hubzylinders vom Zylinderraum aus eine Leitung zum Schwenkzylinder freigegeben wird, um die Verlängerung auszuklappen. Bei absinkender Brückenplatte entsteht dann in der Rücklaufleitung für die hydraulische Flüssigkeit ein solcher Rückstau, dass sich die Verlängerung in ihrer Wirklage hält. Die Druckleitung des Schwenkzylinders ist hierbei nicht an die Druckleitung des Hubzylinders angeschlossen.

Der Erfindung liegt die Aufgabe zugrunde, die eingangs erwähnten Überfahrbrücken so zu verbessern, dass ohne zusätzliche Steuerungsmittel und bei sehr einfachem Aufbau der Huborgane für die Brückenplatte und der Schwenkorgane für die Verlängerung die ausgeklappte Verlängerung beim Absinken der Brückenplatte in dieser Lage gehalten werden kann.

Diese Aufgabe wird erfindungsgemäss dadurch gelöst, dass der Hubzylinder und der Schwenkzylinder einfachwirkend ausgebildet sind und die Rückflussleitung des einfachwirkenden Hubzylinders mit der Druckleitung des einfachwirkenden Schwenkzylinders durch ein Rückschlagventil verbunden ist, wobei der in der Rückflussleitung durch das Eigengewicht der absinkenden Brückenplatte entstehende Staudruck derart grösser ist als der Druck in der Druckleitung, dass das Rückschlagventil ein Überfliessen des Druckmittels von der Rückflussleitung auf die Druckleitung des einfachwirkenden Schwenkzylinders unterbindet.

Zur Inbetriebnahme der Überfahrbrücke wird die Brückenplatte angehoben. Mit dem sich in der oberen Endstellung der Brückenplatte bildenden Überdruck wird über ein Druckbegrenzungsventil ein Ausklappen der Verlängerung erreicht. Erfolgt nun die gewünschte Senkbewegung der Brückenplatte zur Einnahme der Wirkstellung der Überfahrbrücke, so ergibt sich ein Staudruck in der Zuleitung zum Hubzylinder, der sich deshalb auf den Schwenkzylinder auswirken kann, weil dessen Druckleitung mit dieser Zuleitung verbunden ist, die bei dem einfachwirkenden Hubzylinder zugleich die einzige Zuleitung ist. Kommt die Verlängerung mit der zu be- bzw. entladenden Plattform in Berührung, so hebt sich der Staudruck auf, weil die Brückenplatte nicht weiter absinken kann, jedoch kann dann die Verlängerung nicht mehr nach unten klappen, weil sie durch die Plattform daran gehindert wird. Wird hingegen die Brückenplatte in die untere Endstellung geführt, so ist ein Einklappen der Verlängerung nicht schädlich, sehr oft sogar erwünscht ; dieses Einklappen erfolgt dann durch das Eigengewicht dieser Verlängerung. Weitere Einzelheiten der Erfindung werden anhand der Zeichnung erläutert, in der ein Ausführungsbeispiel der Erfindung dargestellt ist.

Es zeigen :

Figur 1 einen Längsschnitt durch eine Überfahrbrücke für eine Rampe, wobei die Verlängerung ausgeklappt ist und die Brückenplatte im Begriffe ist abzusinken, und

Figur 2 die hydraulische Anlage für die Brücke gemäss Fig. 1 in schematischer Darstellung.

Die Brückenplatte 1 ist an ihrem hinteren Ende um eine waagerechte Achse 2 schwenkbar an der Rampe 3 gelagert. Die Brückenplatte 1 hat an ihrem vorderen Ende eine klappbare Verlängerung 4, die in der Ruhestellung (gestrichelte Wiedergabe) nach unten geklappt und in der Wirkstellung ausgeklappt ist und dabei etwa in der durch die Brückenplatte 1 bestimmten Ebene liegt. In der Wirkstellung — wenn die Verlängerung 4 auf der zu beladenden oder entladenden Plattform 5 aufliegt — stützt sich die Brückenplatte 1 auf der Verlängerung 4 und diese wiederum auf der Plattform 5 ab, so dass die Brückenplatte 1 etwaigen Höhenänderungen der Plattform 5 folgen kann.

Mit der Brückenplatte 1 ist noch ein Anschlaghebel 6 verbunden, der in der oberen Endstellung der Brückenplatte 1 mit einem Widerlager 7 und in der unteren Endstellung mit einem festen Widerlager 8 in Berührung kommt. Dieses Endbegrenzungen können auch an anderer Stelle der Brücke angeordnet und sinngemäss abweichend ausgeführt sein.

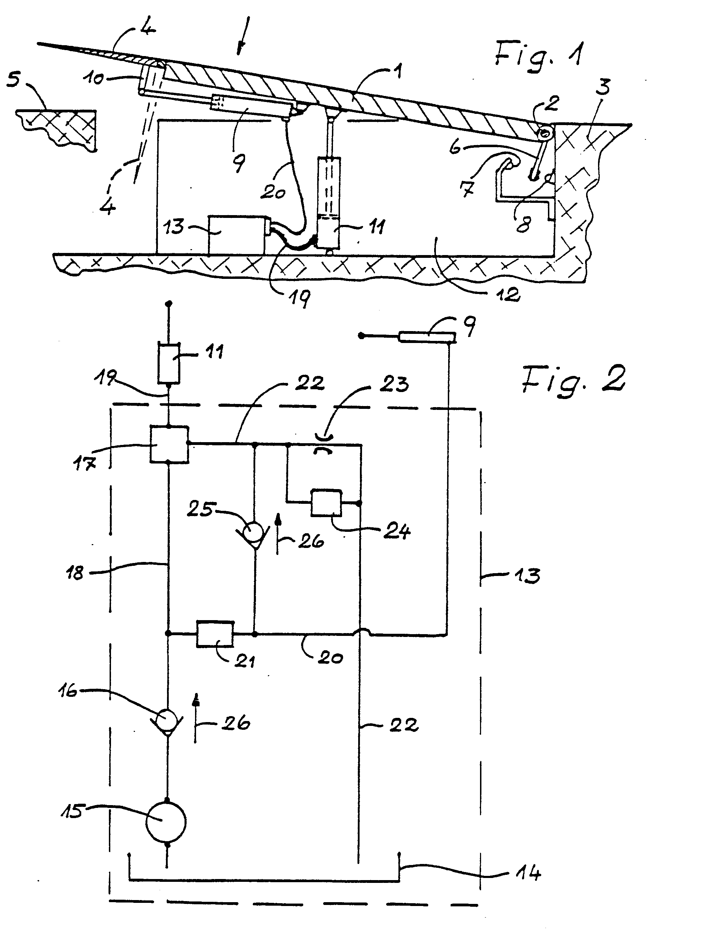

An der Unterseite der Brückenplatte 1 ist ein hydraulischer Schwenkzylinder 9 — in Längsrichtung der Brückenplatte 1 verlaufend — angelenkt, der an einem mit der Verlängerung 4 fest verbundenen Hebel 10 gelenkig angreift. Mit diesem Schwenkzylinder 9 kann die Verlängerung 4 ausgeklappt (siehe Fig. 1) und in der ausgeklappten Stellung gehalten werden. Für die Brückenplatte 1 ist noch ein Hubzylinder 11 vorgesehen, der sich unterhalb der Brückenplatte 1 in einer Rampenausnehmung 12 befindet, deren Abmessungen denjenigen der Brückenplatte 1 entsprechen.

Ein Hauptbestandteil der hydraulischen Anlage ist das Aggregat 13 in der Rampenausnehmung 12. Dieses Aggregat 13 hat einen Ölsammelbehälter 14, einen Druckerzeuger in Form einer Pumpe 15, ein vor dem Pumpenaustritt befindliches Rückschlagventil 16, ein Schaltventil 17 nach Art eines Dreiwegeventils in der Druckleitung 18 der Pumpe 15 und einen Anschluss für die Zuleitung 19 zum Hubzylinder 11. Von der Druckleitung 18 führt eine Zuleitung 20 zum Schwenkzylinder 9, und zwar über Druckbegrenzungsventil 21 (nach Art eines Überdruckventils). Ferner ist noch eine zum Rückführen des Öls dienende Leitung 22 vorgesehen, die von dem Schaltventil 17 ausgeht und über eine Drossel 23 zum Ölsammelbehälter 14 führt. Der Drossel 23 ist noch ein Beipass in Form eines weiteren Druckbegrenzerventils 24 zugeordnet. Schliesslich stehen die Leitungen 22 und 20 über ein weiteres Rückschlagventil 25 in Verbindung.

Die möglichen Durchflussrichtungen für die Rückschlagventile 25 und 16 sind durch Pfeile 26 angezeigt.

Befindet sich die Brücke in der Ruhestellung, wobei die Brückenplatte 1 mit der Rampenoberfläche abschneidet und die Verlängerung 4 nach unten geklappt ist, und soll nunmehr die Brücke in Betrieb genommen werden, so wird die Pumpe 15 in Betrieb gesetzt, womit über die Druckleitung 18 und das Schaltventil 17 das Druckmittel in den Hubzylinder 11 gelangt. Das Druckmittel wird jedoch bei diesem Vorgang durch das Druckbegrenzungsventil 21 vom Schwenkzylinder 9 abgehalten.

Wird die obere Endstellung der Brückenplatte 1 durch Anlegen an das Widerlager 7 erreicht, so steigt der Druck in der Druckleitung 18. Das Druckbegrenzungsventil 21 spricht an und versorgt den Schwenkzylinder 9 mit dem Druckmittel.

Nunmehr erfolgt das Ausschwenken der Verlängerung 4 in die Wirklage. Alsdann wird die Pumpe 15 abgestellt ; aufgrund seines Eigengewichtes sinkt die Brückenplatte 1 nach unten ab, wobei sich infolge der Drossel 23 vor dieser in der Leitung 22 ein Staudruck ausbildet, der wesentlich grösser ist als der Druck in der Leitung 20, womit auch ein Abströmen des Druckmittels vom Schwenkzylinder 9 ausgeschlossen ist. Dieser Staudruck bleibt für die Dauer den Senkbewegung der Brückenplatte 1 erhalten.

Legt sich die Verlängerung 4 auf die Plattform 5 auf, so entfällt der Staudruck. Ein ungewolltes Herunterklappen der Verlängerung 4 kann jedoch jetzt nicht mehr eintreten.

Treten aussergewöhnliche Umstände z. B. durch Überlast auf, so steigt der vom Hubzylinder 11 bewirkte Staudruck in einem solchen Masse, dass die Drossel 23 durch Ansprechen des Druckbegrenzungsventils 24 umgangen wird. Das Schaltventil 17 oder ein zusätzliches Ventil können dann aufgrund eines dabei auftretenden erhöhten Öldurchsatzes schliessen, bzw. die Leitung 19 absperren. Die eventuell ausgeklappte Verlängerung 4 klappt aufgrund ihres Eigengewichtes ein.

Es ist ferner auch möglich, bei der Hubbewegung der Brückenplatte 1 die Verlängerung 4 einzuklappen. Da hierbei aufgrund des Schaltventils 17 die Leitung 22 nicht unter Pumpendruck steht, kann das Eigengewicht der Verlängerung 4 das Druckmittel über das Rückschlagventil 25 und die Drossel 23 in den Ölsammelbehälter 14 zurücktreiben.

Das Rückschlagventil 25 hat noch den weiteren Vorteil, dass eine nicht gänzlich ausgeklappte Verlängerung 4 bei nachfolgender Senkbewegung der Brückenplatte 1 nicht ungewollt ganz ausklappen kann, wodurch Schäden eintreten könnten.

Aufgrund der Erfindung können somit mit einfachen Arbeitszylindern 9, 11 als einfachwirkende Zylinder und mit einfachen Schaltelementen der Hydraulik sichere, dauerhafte Hydraulikbrücken erstellt werden. Insb. ist es möglich, das Ausklappen der Verlängerung und deren Halterung bis zum Aufsetzen auf eine Plattform bzw. bis zum Erreichen einer unteren Endstellung ohne zusätzliche Steuerungsmittel zu bewerkstelligen.

**Patentansprüche**

1. Überfahrbrücke für Rampen mit einer an ihrem hinteren Ende um eine waagerechte Achse (2) an der Rampe schwenkbar gelagerten, durch einen Hubzylinder (11) nach oben bewegbaren Brückenplatte (1) und einer am freien Ende der Brückenplatte (1) angelenkten, durch einen Schwenkzylinder (9) in ihre Wirklage bewegbaren Verlängerung (4), die sich in ihrer Wirklage auf einer zu be- bzw. entladenden Plattform (5) abstützt und zur Einnahme ihrer Ruhelage in eine etwa senkrechte Stellung schwenkbar ist, wobei die Druckleitung (20) des Schwenkzylinders (9) über ein Druckbegrenzungsventil (21) an die Druckleitung (19) des Hubzylinders (11) angeschlossen ist in der Weise, dass die Verlängerung (4) erst in die Wiklage ausklappt, wenn die Brückenplatte (1) ihre obere Endstellung einnimmt, und bei abgeschaltetem Druckerzeuger (15) sich die Brückenplatte (1) bei in Wirklage befindlicher Verlängerung (4) aufgrund ihres Eigengewichtes absenkt, dadurch gekennzeichnet, dass der Hubzylinder (11) und der Schwenkzylinder (9) einfachwirkend ausgebildet sind und die Rückflussleitung (22) des einfachwirkenden Hubzylinders (11) mit der Druckleitung (20) des einfachwirkenden Schwenkzylinders (9) durch ein Rückschlagventil (25) verbunden ist, wobei der in der Rückflussleitung (22) durch das Eigengewicht der absinkenden Brückenplatte (1) entstehende Staudruck derart grösser ist als der Druck in der Druckleitung (20), dass das Rückschlagventil (25) ein Überfliessen des Druckmittels von der Rückflussleitung (22) auf die Druckleitung (20) des einfachwirkenden Schwenkzylinders (9) unterbindet.

2. Überfahrbrücke nach Anspruch 1, dadurch gekennzeichnet, dass sich in der Rückflussleitung (22) des einfachwirkenden Hubzylinders (11) als Beipass zu einer Drossel (23) ein bei erhöhtem Druck öffnendes Ventil (24) vorgesehen ist.

3. Überfahrbrücke nach Anspruch 1, dadurch gekennzeichnet, dass die das Rückschlagventil (25) aufweisende Leitung von der Rückflussleitung (22) in einem Abschnitt abgezweigt ist, der sich zwischen dem einfachwirkenden Hubzylinder (11) und einer Drossel (23) befindet.

4. Überfahrbrücke nach Anspruch 1, dadurch gekennzeichnet, dass das Druckbegrenzungsventil (21) nur bei mechanisch blockierter Brückenplatte (1) anspricht.

**Claims**

1. Dockboard for loading ramps having a bridging plate (1), which is mounted at its rear end on the ramp so as to be pivotable about a horizontal axis (2) and is upwardly displaceable by means of a lifting cylinder (11), and an extension portion (4), which is pivotally hinged to the free end of the bridging plate (1) and is displaceable into its operative position by means of a pivotal cylinder (9), the extension portion being supported in its operative position on a platform (5) to be loaded or unloaded and being pivotable into a substantially vertical position to assume its position of rest, whereby the pressure line (20) of the pivotal cylinder (9) is connected, *via* a pressure limiting valve (21), to the pressure line (19) of the lifting cylinder (11) in such a manner that the extension portion (4) only swivels-out into its operative position when the bridging plate (1) assumes its upper end position and, when the pressure generator (15) is switched-off and the extension portion (4) is in its operative position, the bridging plate (1) is lowered as a result of its own weight, characterised in that the lifting cylinder (11) and the pivotal cylinder (9) are adapted to be single-acting, and the return line (22) of the single-acting lifting cylinder (11) is connected to the pressure line (20) of the single-acting pivotal cylinder (9) by means of a relief valve (25), whereby the dynamic pressure, which is being produced in the return line (22) by the specific weight of the lowering bridging plate (1), is greater than the pressure in the pressure line (20) so that the relief valve (25) prevents the pressure medium overflowing from the return line (22) onto the pressure line (20) of the single-acting pivotal cylinder (9).

2. Dockboard according to claim 1, characterised in that a valve (24), which opens at increased pressure, is provided in the return line (22) of the single-acting lifting cylinder (11) as a bypass to a throttle (23).

3. Dockboard according to claim 1, characterised in that the line having the relief valve (25) is branched-off from the return line (22) in a portion situated between the single-acting lifting cylinder (11) and a throttle (23).

4. Dockboard according to claim 1, characterised in that the pressure limiting valve (21) acts only when the bridging plate (1) is mechanically blocked.

**Revendications**

1. Passerelle pour rampes, comprenant une plaque de passerelle (1) articulée sur la rampe par son extrémité arrière, autour d'un axe horizontal (2), et relevable par un vérin de levage (11), ainsi qu'une rallonge (4) articulée sur l'extrémité libre de la plaque de passerelle (1) et pouvant être amenée par un vérin de dépliage (9) dans sa position de travail, où elle s'appuie sur une plate-forme (5) de chargement ou de déchargement, et pouvant tourner dans une position de repos à peu près verticale, la conduite d'alimentation (20) du vérin de dépliage (9) étant raccordée à travers une soupape limitatrice de pression (21) à la conduite d'alimentation (19) du vérin de levage (11), de manière que la rallonge (4) se déplie seulement dans sa position de travail lorsque la plaque de passerelle (1) arrive dans sa position de fin de course supérieure, la plaque de passerelle (1) descendant sous l'effet de son propre poids lorsque le générateur de pression (15) est arrêté et que la rallonge (4) occupe sa position de travail, caractérisée en ce que le vérin de levage (11) et le vérin de dépliage (9) sont à simple effet et la conduite de retour (22) du vérin de levage (11) à simple effet est raccordée à travers un clapet antiretour (25) à la conduite d'alimentation du vérin de dépliage (9) à simple effet, la pression de reflux créée dans la conduite de retour (22) par le poids propre de la plaque de passerelle (1) descendante étant supérieure à la pression dans la conduite d'alimentation (20), dans une mesure telle que le clapet antiretour (25) empêche le passage du fluide de pression de la conduite de retour (22) à la conduite d'alimentation (20) du vérin de dépliage (9).

2. Passerelle selon la revendication 1, caractérisée en ce que la conduite de retour (22) du vérin de levage (11) à simple effet contient, en dérivation avec un étranglement (23), une soupape (24) qui s'ouvre sous une pression accrue.

3. Passerelle selon la revendication 1, caractérisée en ce que la conduite contenant le clapet antiretour (25) part de la conduite de retour (22) dans un tronçon de cette conduite situé entre le vérin de levage (11) à simple effet et un étranglement (23).

4. Passerelle selon la revendication 1, caractérisée en ce que la soupape limitatrice de pression (21) entre seulement en action lorsque la plaque de passerelle (1) est bloquée mécaniquement.

Fig. 1

Fig. 2